# EUROPÄISCHE PATENTANMELDUNG

(11) **EP 1 080 825 A2**
(43) Veröffentlichungstag der Anmeldung: **07.03.2001**
(21) Anmeldenummer: 00118570.1
(22) Anmeldetag: 26.08.2000
(51) Int. Cl.: B23K 37/04

(54) **Bearbeitungstisch mit Abausaugeinrichtung**

(30) Priorität: 02.09.1999 DE 19941750
(71) Anmelder: Buser, Hermann, 67659 Kaiserslautern (DE); CMS 3 GmbH, 67659 Kaiserslautern (DE)
(72) Erfinder: Buser, Hermann, 67659 Kaiserslautern (DE)
(74) Vertreter: Pietruk, Claus Peter, Dipl.-Phys.

(57) **Zusammenfassung**

Beschrieben wird ein Bearbeitungstisch mit einer der Bearbeitungsfläche gegenüberliegenden, entsprechend einer Bearbeitungswerkzeugbewegung lokal wirkenden Absaugeinrichtung. Es wird vorgeschlagen, daß dabei die Absaugeinrichtung mit Seitenöffnung versehene Querkammern gegenüberliegend der Bearbeitungsfläche und zumindest einen Absaugkopf umfaßt, der saugschlüssig vor die jeweiligen Werkzeugpositionen entsprechenden Seitenöffnungen bewegbar ist.

## Beschreibung

Die vorliegende Erfindung betrifft einen Bearbeitungstisch nach dem Oberbegriff des unabhängigen Anspruches.

Werkbänke, auf denen bei der Bearbeitung Rauch und/oder störende Gase entstehen, sind beispielsweise Brennertische für Plasma-Schneidmaschinen, mit welchen Bleche bis zu einer Stärke von über 1 mm geschnitten werden. Bei solchen Maschinen wird ein zu bearbeitendes Werkstück, z.B. eine große Blechtafel, auf einen Brennertisch gelegt und dann mit einem verfahrbaren Bearbeitungskopf, beispielsweise einer Plasma-Schneidmaschine das Blech geschnitten. Die Auflagefläche ist dabei nach unten hin offen und die entstehenden Abgase sowie der beim Schneiden gebildete Rauch können nach unten abgesaugt werden.

Hierbei gibt es zwei prinzipielle Möglichkeiten, die Absaugung zu bewirken. Bei der ersten befindet sich unter dem Tisch eine durchgehende Wanne, welche nach unten abgesaugt wird. Nachteilig ist, daß dabei ein großer Bereich abgesaugt wird, in welchem keine Stäube, kein Rauch und keine Gase entstehen. Die angesaugte Menge an Falschluft ist daher sehr hoch. Ein Ausweg zur Verringerung der angesaugten Falschluft besteht zunächst darin, bei Blechtafeln, welche kleiner als die Auflagefläche des Auflagetisches sind, eine Abdichtung zum Rand mit Abdichtplatten und dergleichen vorzunehmen. Aber auch damit kann die Menge angesaugter Falschluft allenfalls verringert werden und überdies ist die Abdichtung arbeitsintensiv.

Eine zweite, im Stand der Technik verwendete Möglichkeit besteht darin, das Schneid- oder Brennwerkzeug an einer verfahrbaren Brücke zu befestigen, die sich quer über den Tisch erstreckt. Die Brückenständer erstrecken sich seitlich bis unterhalb des Tisches, wo eine kurze Wanne an den Brückenständern befestigt ist. Die Wanne wird abgesaugt. Da sich, wenn die Brücke entlang des Tisches bewegt wird, die Wanne mit bewegt, erfolgt die Absaugung stets am richtigen Ort. Nachteilig ist hierbei zum einen, daß der Tisch nicht zentral abgestützt werden kann, was seine mechanische Stabilität und/oder die maximale Größe sowie das maximale Traggewicht beeinträchtigt. Nachteilig ist weiter, daß bei der Bearbeitung, also beim Schweißen oder Brennen ausgeschnittene Teile aus dem Blech herausfallen können und sich an der Auflage so verhaken, daß die Brückenbewegung verhindert wird. Dies kann zu Zerstörungen des Brückenantriebs sowie des zu bearbeitenden Werkstückes führen.

Die Aufgabe der vorliegenden Erfindung besteht darin, Neues für die gewerbliche Anwendung bereit zu stellen.

Die Lösung dieser Aufgabe wird unabhängig beansprucht. Bevorzugte Ausführungsformen finden sich in den abhängigen Ansprüchen.

Ein erster wesentlicher Aspekt der Erfindung ist somit darin zu sehen, daß ein Bearbeitungstisch mit einer der Bearbeitungsfläche gegenüberliegenden, entsprechend der Bewegung eines Werkzeuges nur nahe der jeweiligen Bearbeitungsstelle wirksamen Absaugeinrichtung geschaffen wird, bei welchem die Absaugeinrichtung mit Seitenöffnung versehene Querkammern gegenüberliegend der Bearbeitungsfläche umfaßt und zumindest einen Absaugkopf, welcher vor die Seitenöffnungen der Querkammern bewegbar ist, und zwar in eine den jeweiligen Werkzeugpositionen entsprechende Stellung und saugschlüssig vor den Seitenöffnungen der Querkammern liegend.

Die Erfindung schafft somit einen Bearbeitungstisch, der nur noch dort abgesaugt wird, wo die Bearbeitung gerade Staub, Rauch, Abgase und dergleichen erzeugt. Zugleich ermöglichen die sich quer über den Bearbeitungstisch bzw. unter dessen Bearbeitungsfläche erstreckenden Querkammern, den Tisch abzustützen, wie dies bei Bearbeitungstischen mit einer einzigen großen Wanne der Fall ist. Die Stabilität ist damit erhöht und es können zugleich ohne Ansteigen der erforderlichen Saugleistung auch sehr große Bearbeitungstischabmessungen realisiert werden.

Die Seitenöffnungen benötigen keinen besonderen Verschluß oder dergleichen, sondern können allzeitig offen sein.

Während es prinzipiell möglich ist, den Bearbeitungstisch auch mit einer diesen übergreifenden Absaugeglocke, die in Querkammern unterteilt ist, vorzusehen, wird in einer bevorzugten Ausführungsvariante eine Absaugung von unten her vorgenommen.

Die Querkammern sind bevorzugt aus parallel zueinander angeordneten Kassetten gebildet. Diese sind im Beschädigungsfalle besonders leicht auswechselbar. Bevorzugt besitzt eine einzelne Kassette dabei eine Breite zwischen 50 und 150 mm. Dies erlaubt eine optimale Dimensionierung sowohl im Hinblick auf den baulichen Aufwand als auch auf das Erfordernis, eine Kassette innerhalb angemessener Zeiten leer saugen zu können, um die Abeitsgeschwindigkeit des Werkzeugs nicht durch Saug-Wartezeiten zu beeinträchtigen. In einer besonders bevorzugten Variante sind die Querkammerbleche mit Versteigungssicken und/oder Versteifungskanten versehen. Dies erhöht die Stabilität in besonderem Maß.

Bevorzugt wird der Absaugkopf mit einer zentralen Ansaugöffnung versehen sein, die von einer Abdichtung umgeben ist. Diese Abdichtung wird sich zum einen bevorzugt in Verfahrrichtung nach links und rechts erstrecken, und zwar um eine derartige Breite, daß bei Positionierung des Absaugkopfes auf einer Kassetten-Trennlinie beide Kammern, vor denen sich der Absaugkopf partiell befindet, gleichermaßen leergesaugt werden, ohne daß Fehlluft angezogen wird. Es versteht sich, daß, wenn der Absaugkopf von vornherein für die gleichzeitige Absaugung mehrerer Kassetten ausgebildet ist, wie beispielsweise zwei oder drei Kassetten, dennoch die seitliche Abdichtung von Vorteil ist. Ein breiter Absaugkopf ist dann vorteilhaft, wenn die Rauch- bzw. Staubentwicklung sehr stark ist, sodaß selbst bei punktueller Raucherzeugung durch einen Schneidbrenner oder dergleichen über den Tisch noch eine starke Rauchausbreitung trotz Absaugens erfolgt.

Weiter sind bevorzugt längs der Verschieberichtung Dichtleisten vorgesehen, an welchen der Ansaugkopf entlang gleitet, um ihn nach oben und unten gegen Fehlluft-Einzug abzudichten. Die Dichtleisten können als gleitunterstützende Teflonleisten, an welchen der Ansaugkopf vorbeigeschoben wird, ausgebildet sein, und/oder einen zumindest nahezu berührungsfreien geschlungenen Pfad mit einer vom Ansaugkopf wegstehenden Dichtleiste bilden, um so unerwünschte Fehlluft-Strömungen zu beeinträchtigen.

Es ist ausreichend, wenn jede Kassette eine einzige Seitenöffnung aufweist. Um bei einer entfernt von der einen Seitenöffnung liegenden Bearbeitungsstelle eine besonders schnelle und sichere Absaugung zu gewährleisten, können die Kassetten bzw. Querkammern auch beidseitig offen sein, um so die Vorbeiführung von Absaugköpfen auf beiden Seiten zu ermöglichen.

In einem bevorzugten Ausführungsbeispiel der Erfindung ist das Bearbeitungswerkzeug an einer über dem Tisch verfahrbaren Brücke angeordnet und der Absaugkopf an einem Brückenständer unterhalb der Bearbeitungsoberfläche angebracht, wodurch er bei Verfahren der Brücke automatisch vor jene Querkammerseitenöffnung bewegt wird, in welche gerade die überwiegende Rauch- oder Staubmenge eindringt.

Wenn das Bearbeitungswerkzeug an einer Brücke befestigt ist, so wird es bevorzugt längs dieser beweglich sein, und zwar in Richtung quer über den Tisch und/oder senkrecht zu diesem. In jedem Fall wird die Absaugvorrichtung mit der Brücke gemeinsam bewegt werden, sodaß jeweils die entsprechende Querkammer abgesaugt wird, gegenüberliegend von welcher sich das Werkzeug befindet.

Das Bearbeitungswerkzeug kann ein thermisches Schneidwerkzeug und/oder ein Schneidbrenner sein, beispielsweise ein Plasma-Schneidbrenner, ein Laser-Schneidgerät oder dergleichen. Alternativ können auch mechanische Bearbeitungswerkzeuge als Bearbeitungswerkzeuge eingesetzt werden.

Besonders bevorzugt ist es, wenn die Querkammer-Oberkanten so ausgebildet sind, daß darauf Lamellenbleche aufgesteckt werden können, in welche zum Aufstecken entsprechende Steckschlitze eingebracht werden. Die Lamellenbleche definieren dann eine Auflagefläche, die ohne weiteres, etwa nach längerem Schweißen auf dem Bearbeitungstisch und ohne hohe Kosten gewechselt werden kann. Da eine solche Arbeitsflächeüberarbeitung regelmäßig erforderlich ist, reduzieren sich die Betriebskosten des Bearbeitungstisches massiv und über die Einsparung der Entlüftung und der damit verbundenen Wärmeabfuhr aus dem Bearbeitungsraum hinaus. Zudem ist der Austausch der Lamellen besonders leicht, ihre Herstellung preiswert und zum Aufsitzen geschlitzter Lamellen auf die Querkammerwände sind keine besonderen Maßnahmen erforderlich.

Der Luftdurchsatz wird in einem bevorzugten Ausführungsbeispiel so gewählt, daß die Luft in einer Kassette maximal 5, bevorzugt unter 5, insbesondere 1 Sekunde ausgetauscht werden kann. Dies verhindert bei herkömmlichen Bearbeitungs- und Werkzeugverfahrbeschwindigkeiten, daß nach Weiterfahren des Werkzeuges noch Rauch in der Kassette steht und sich dann zurück in den Raum ausbreitet. Bei noch weiter steigenden Bearbeitungsgeschwindigkeiten könnte zudem eine zweite Absaugleitung mit geringerer Luftabfuhr vorgesehen werden, welche alle Querkammern dauerhaft absaugt und so einen permanenten Unterdruck unter dem Tisch erzeugt. Man hat dann starke Absaugströmung an der Stelle, an welcher gerade eine Bearbeitung stattfindet und eine geringere, Rückströmungen verhindernde Absaugung an allen Querkammern.

Bevorzugt wird der Luftdurchsatz durch den Tisch bei herkömmlichen Größen bis zu 3 Metern Tischlänge unter 4000 m³/h und bevorzugt nur etwa 1200 m³/h betragen.

Zusätzlich können in die Absaugkammern schubladenartige Einsätze eingeschoben sein, um die Schlacke besonders gut auszuräumen zu können.

Die Erfindung wird im folgenden nur beispielsweise anhand der Zeichnung beschrieben. In dieser zeigt:
- Figur 1: einen Bearbeitungstisch gemäß der vorliegenden Erfindung;

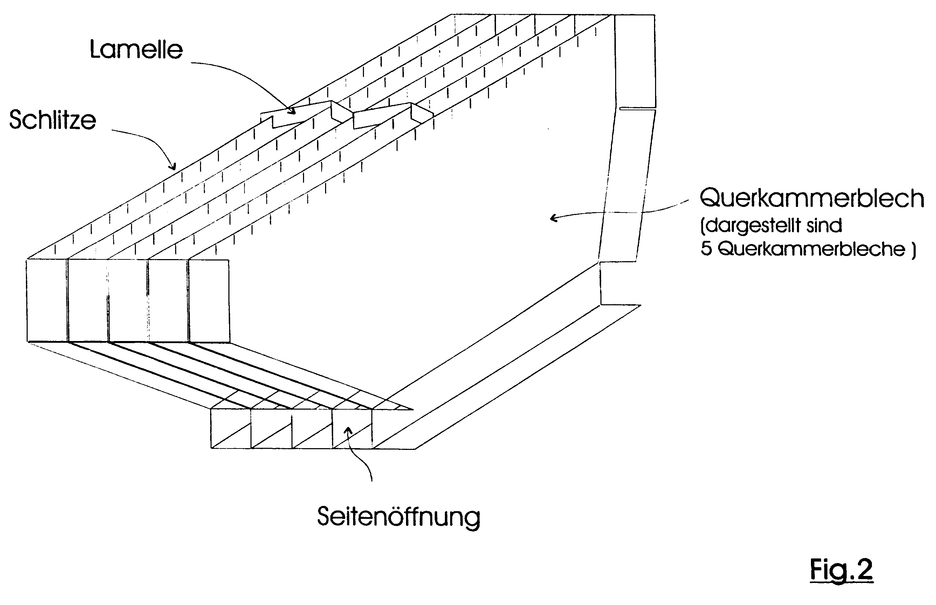

- Figur 2: eine Detailansicht der Querkammern,

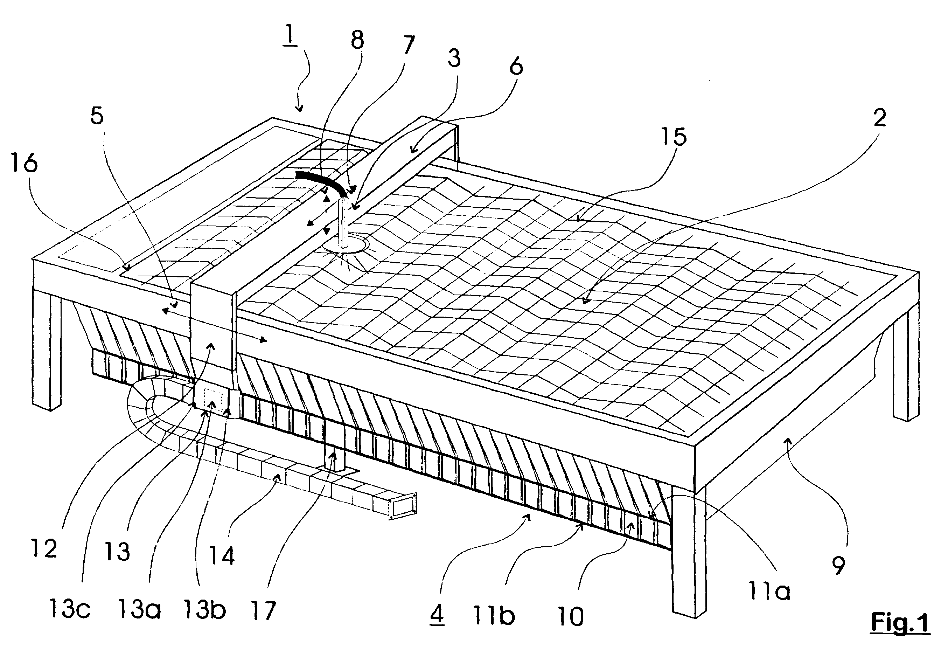

Nach Figur 1 umfaßt ein allgemein mit 1 bezeichneter Bearbeitungstisch 1 eine Bearbeitungsfläche 2, über die sich ein Bearbeitungswerkzeug 3 bewegt, und eine Absaugvorrichtung 4.

Das Bearbeitungswerkzeug 3 ist an einer wie durch Pfeil 5 angedeutet längs des Tisches 1 verfahrbaren Brücke 6 auf- und ab- sowie hin- und herbeweglich wie durch Pfeile 7 und 8 angedeutet. Eine Steuerung (nicht gezeigt) steuert einerseits die Bewegung des Bearbeitungswerkzeuges 3 und andererseits dessen Beaufschlagung mit der erforderlichen Energie zur Bearbeitung eines auf die Tischfläche 2 legbaren Werkstückes (nicht gezeigt).

Unterhalb des Tisches sind eine Vielzahl von sich parallel zur Brücke 6 erstreckenden und nach oben offenen Querkammern 9 gebildet, die Seitenöffnungen 10 aufweisen. Die Seitenöffnungen liegen wie ersichtlich unmittelbar nebeneinander und bilden eine einzige Absaugebene. Oberhalb und unterhalb der Seitenöffnungen sind sich über alle Querkammern erstreckende Teflonleisten 11a, 11b vorgesehen.

Unterhalb der Querkammern 9 ist zentral eine Abstützung 17 angeordnet.

An den Seitenöffnungen 10 der Querkammern 9 gleitet ein an einem Arm 12 der Brücke 6 befestigter Absaugkopf 13 vorbei, der linear über einen flexiblen Schlauch 14 mit einer Entlüftungsvorrichtung (nicht gezeigt) verbunden ist, die in herkömmlicher Weise Filter, Lüfter und dergleichen aufweist.

Der Absaugkopf 13 weist eine zentrale Öffnung 13a auf, die die Breite einer Seitenöffnung 10 einer Querkammer 9 aufweist und welche links und rechts von Dichtflächen 13b, 13c umgeben ist. Der Absaugkopf 13 liegt oben und unten an den Dichtleisten 11a, 11b an, während die Dichtflächen 13b, 13c unmittelbar vor den Seitenöffnungen 10 liegen.

Auf die Querkammeroberkanten sind von oben geschlitzte Lamellenbleche 15 aufgesteckt, die gemeinsam eine Auflagefläche definieren. Es versteht sich, daß die Lamellenbleche nicht zwingend in jede Querkammertrennwand eingesteckt sein müssen, sondern daß, falls gewünscht, nur bei jeder n-ten Querkammer ein Steckschlitz vorgesehen sein muß. Die Lamellen sind zick-zack-förmig über den Tisch gezogen, um sie gegen seitliche Belastung zu stabilisieren.

Im Betrieb wird zunächst die Brücke 6 in eine Endposition 16 gefahren, ein Werkstück auf die Bearbeitungsfläche 2 aufgelegt und die Ablüftung eingeschaltet.

Dann wird das Bearbeitungswerkzeug 3 mit der Brücke 6 an die erste gewünschte Bearbeitungsstelle gefahren. Diese Bewegung, die eine Bewegung der Brücke 6 längs Pfeil 5 mit sich bringt, bewegt den Absaugkopf 13 derart mit, daß die Absaugöffnung 13a unmittelbar vor einer Seitenöffnung 10n einer Querkammer liegt, während die umgebenden Querkammerseitenöffnungen 10(n-1) und 10(n+1) durch die Dichtflächen 13b, 13c abgedeckt sind. Wenn nun durch die Befestigung des Werkzeuges 3 Rauch und/oder Staub erzeugt wird, wird Luft aus der darunter befindlichen Kammer abgesaugt, so daß der erzeugte Rauch und/oder Staub in genau diese Querkammer-Kasette einströmt und demanch dort abgesaugt wird. Da nur eine einzige Kammer abgesaugt wird, ist die Saugleistung aus dieser Kammer auch bei geringem Gesamtluftdurchsatz hoch. Dabei verhindern die Dichtflächen 13b, 13c und die Dichtleisten 11a, 11b, daß Falschluft eingezogen wird.

Wenn dann die Brücke eine halbe Querkammerbreite weiter bewegt wird, befindet sich der Absaugkopf genau mittig zwischen zwei Querkammern und saugt nunmehr zwei Kammern gleichzeitig leer. Wiederum ist durch die Dichtflächen 13b, 13c und die Dichtleisten 11a, 11b die Ansaugung von Falschluft sicher vermieden.

Gelangt das Werkzeug in die Mitte des Tisches, so ist ein Durchbiegen dank der zusätzlichen Abstützung 12 auch bei schweren Werkstücken und/oder drückender Belastung des Werkzeuges gering, was die Bearbeitungspräzision insgesamt erhöht.

Wenn nach einer Vielzahl von Bearbeitungszyklen die Lamellenbleche 15 durch das Schneid-Werkzeug 3 angegriffen sind, können sie ohne Probleme abgezogen und einzeln gegen neue Lamellen ersetzt werden, wie erforderlich.

Es sei darauf hingewiesen, daß der zusätzliche Mehraufwand durch die Ausbildung von Querkammern im Vergleich zu einer durchgehenden Wanne mehr als aufgewogen wird durch die Verringerung der zu fördernden Abluftmenge. Eine große zu fördernde Abluftmenge führt nicht nur zu einem erhöhten Investitions- und Strombedarf bei den Luftförderern und -reinigern, sondern erhöht auch den Wärmeabfluß etwa aus beheizten Industriehallen im Winter. Zudem erlaubt die Ausbildung mit Querkammern die Verwendung geschlitzter Lamellenbleche, was sich gleichfalls vorteilhaft auf die Betriebs- und Herstellungskosten auswirkt.

Anstelle der Teflonleisten 12 sind einleuchtender Weise auch andere Leisten aus geeigneten Materialien verwendbar.

Der Absaugkopf muß nicht zwingend rechteckig sein; vor allem, wenn er sich über mehr als eine Absaugkammerbreite erstreckt, kann er in den Außenbereichen eine geringere Mundöffnung aufweisen, so daß aus den Nebenkammern eine geringere Luftmenge angesaugt wird.

## Patentansprüche

1. Bearbeitungstisch mit einer der Bearbeitungsfläche gegenüberliegenden, entsprechend einer Bearbeitungswerkzeugbewegung lokal wirkenden Absaugeinrichtung, dadurch gekennzeichnet, daß die Absaugeinrichtung mit Seitenöffnung versehene Querkammern gegenüberliegend der Bearbeitungsfläche und zumindest einen Absaugkopf umfaßt, der saugschlüssig vor die jeweiligen Werkzeugpositionen entsprechenden Seitenöffnungen bewegbar ist.

2. Bearbeitungstisch nach Anspruch 1, dadurch gekennzeichnet, daß die Absaugereinrichtung unter der Bearbeitungsfläche angeordnet ist.

3. Bearbeitungstisch nach einem der vorhergehenden Ansprüche, dadurch gekennzeichnet, daß die Querkammer aus einer Vielzahl zueinander paralleler und voneinander trennbarer Kassetten gebildet sind.

4. Bearbeitungstisch nach dem vorhergehenden Anspruch, dadurch gekennzeichnet, daß die Kassetten eine Breite zwischen 40 und 250 mm, bevorzugt 70 und 140 mm besitzen.

5. Bearbeitungstisch nach einem der vorhergehenden Ansprüche, dadurch gekennzeichnet, daß der Absaugkopf eine zentrale Absaugöffnung mit einer umgebenden Abdichtung umfaßt.

6. Bearbeitungstisch nach dem vorhergehenden Anspruch, dadurch gekennzeichnet, daß die Abdichtung des Absaugkopfes in beiden Verfahrrichtungen eine Breite aufweist, die wenigstens einer Kassettenbreite entspricht.

7. Bearbeitungstisch nach einem der Ansprüche 5 oder 6, dadurch gekennzeichnet, daß oberhalb und/oder unterhalb der Ansaugöffnung Dichtleisten vorgesehen sind.

8. Bearbeitungstisch nach einem der vorhergehenden Ansprüche, dadurch gekennzeichnet, daß jede Querkammer genau eine Seitenöffnung aufweist und vorzugsweise alle Seitenöffnungen paarweise bündig nebeneinander liegen und/oder unmittelbar aneinander angrenzen.

9. Bearbeitungstisch nach einem der Ansprüche 1 bis 7, dadurch gekennzeichnet, daß jede Querkammer an ihren voneinander wegweisenden Enden jeweils eine Seitenöffnung aufweist und jeder Seitenöffnung ein Absaugkopf zugeordnet ist.

10. Bearbeitungstisch nach einem der vorhergehenden Ansprüche, dadurch gekennzeichnet, daß das Bearbeitungswerkzeug an einer über den Tisch verfahrbaren Brücke angeordnet ist und der Absaugkopf an einem unter die Bearbeitungsfläche vor die Querkammerseitenöffnungen abhängenden Brückenarm angebracht ist.

11. Bearbeitungstisch nach dem vorhergehenden Anspruch, dadurch gekennzeichnet, daß das Bearbeitungswerkzeug längs und/oder quer zur Brücke beweglich ist, um so eine xy- und/oder eine xyz-Positionierung des Werkzeuges zu ermöglichen und wobei unter Verfahren der Brücke in x-Richtung die Position des Absaugkopfes durch die x-Position der Brücke definiert ist.

12. Bearbeitungstisch nach einem der vorhergehenden Ansprüche, dadurch gekennzeichnet, daß das Bearbeitungswerkzeug ein Schneidwerkzeug und/oder ein Schneidbrennwerkzeug, insbesondere ein Schneidbrenner, ein Plasmaschneidbrenner und/oder ein Laserschneidkopf ist.

13. Bearbeitungstisch nach einem der vorhergehenden Ansprüche, dadurch gekennzeichnet, daß auf die Oberkanten der Querkammern insbesondere geschlitzte Lamellenstreifen aus Blech oder dergleichen aufgesetzt werden, um eine verbrauchbare Auflagefläche für zu bearbeitende Werkstücke zu definieren.

14. Bearbeitungstisch nach einem der vorhergehenden Ansprüche, dadurch gekennzeichnet, daß der Luftdurchsatz so gewählt wird, daß eine Querkammer in maximal fünf, bevorzugt maximal einer Sekunde, insbesondere bevorzugt deutlich unter einer Sekunde, leergesaugt bzw. luftausgetauscht wird.

15. Bearbeitungstisch nach einem der vorhergehenden Ansprüche, dadurch gekennzeichnet, daß der Luftdurchsatz bei unter 4000 m³/h, bevorzugt unter 1200 m³/h liegt.

16. Bearbeitungstisch nach einem der vorhergehenden Ansprüche, dadurch gekennzeichnet, daß der Absaugkopf über eine flexible Leitung mit einer ortsfesten Lüftungsanordnung verbunden ist.
